# FASCICULE DE BREVET EUROPEEN

(11) **EP 1 280 323 B1**
(45) Date de publication et mention de la délivrance du brevet: **16.03.2005**
(21) Numéro de dépôt: 02291868.4
(22) Date de dépôt: 24.07.2002
(51) Int. Cl.: H04M 1/725

(54) **Procédé d'intercommunication entre au moins trois combinés d'un réseau local de radio communication; combiné permettant sa mise en oeuvre**
Interkommunikationsverfahren zwischen mindestens drei Handapparaten in einem lokalen Funkkommunikationsnetz und Handapparat dafür
Intercom method between at least three handsets in a local radiocommunication network and handset therefor

(30) Priorité: 25.07.2001 FR 0109917
(43) Date de publication de la demande: 29.01.2003
(73) Titulaire: SAGEM SA, 75015 Paris (FR)
(72) Inventeur: Sudrat, Erwan, 95000 Cergy Pontoise (FR)
(74) Mandataire: Bloch, Gérard

(56) Documents cités:
- EP-A- 0 544 100
- EP-A- 0 933 915
- EP-A- 1 039 728
- EP-A- 1 051 875

## Description

La présente invention concerne les communications entres les combinés téléphoniques d'un réseau local de transmission radio de signaux numériques.

Lorsqu'un tel réseau est établi selon la norme DECT par exemple, il comporte une base radio à travers laquelle les combinés téléphoniques, désignés aussi terminaux, peuvent communiquer entre eux. La base constitue un nceud central du réseau, qui retransmet à chaque combiné téléphonique les signaux numériques, de voix ou de données, reçus de son correspondant avec lequel il communique.

Pour traiter une pluralité de communications simultanées, la base asservit les combinés téléphoniques en les synchronisant sur une trame temporelle d'une pluralité de canaux dont les premiers sont réservés aux transmissions de la base vers les combinés téléphoniques et les derniers sont réservés aux transmissions de sens opposé. Une telle trame est du type TDMA/TDD à Accès Multiple par Division Temporelle/ division Temporelle duplex. Pour établir cet asservissement temporel la base émet cycliquement une balise, un mot de code, dans un canal d'émission prédéterminé, en indiquant son rang dans la trame. Tout combiné téléphonique qui entre dans la zone de couverture radio de la base reconnaît la balise et, d'après l'instant correspondant et le rang du canal, il en détermine le début de la nouvelle trame et cale ainsi temporellement ses émissions et réceptions sur la trame de la base.

Au sein d'un tel réseau, on sait aussi établir une liaison en mode direct de combiné téléphonique à combiné téléphonique. Ce mode de communication permet à deux utilisateurs de communiquer sans avoir besoin d'être à portée de la base DECT.

Pour établir ce mode de communication, la procédure connue consiste à saisir tout d'abord une clé à 5 chiffres comportant un numéro de groupe à trois chiffres pour identifier la base et deux chiffres pour identifier le ou les combinés téléphoniques avec lesquels on souhaite communiquer dans ce mode et qui comportent en mémoire le même numéro de groupe. Une fois ces informations pré-saisies, on peut mettre deux combinés téléphoniques en communication en mode direct en sélectionnant ce mode sur les combinés téléphoniques et en saisissant le numéro du combiné téléphonique avec lequel on souhaite se mettre en communication directe.

Il apparaît cependant que la transmission ne peut s'établir qu'entre deux combinés téléphoniques. Lorsqu'un combiné téléphonique émet un signal audio selon l'art antérieur, seul le combiné téléphonique appelé peut reproduire son contenu sur son haut-parleur. On connaît le document EP 1 051 875 qui décrit un procédé pour établir une communication entre une base radio et au moins un premier et un deuxième combiné téléphonique. Il comprend les étapes suivantes
- établissement d'une première connection entre le premier et la base radio,
- transmission des instructions de connection pour établir une deuxième connection entre les deux combinés téléphoniques,
- établissement de la deuxième connection entre les deux combinés téléphoniques,
- transmission des données bipassant la base radio.

La demanderesse s'est fixé comme objectif de permettre à au moins un combiné téléphonique tiers apparié à la même base ou ayant la même identification de groupe l'écoute des messages audio émis par l'appelant.

Conformément à l'invention, elle parvient à cet objectif avec un procédé d'intercommunication dans un réseau local de radio communication à accès duplex multiple par division temporelle, comprenant au moins une base radio reliée à un réseau externe tel que le réseau téléphonique commuté et associés à celle-ci au moins trois combinés téléphoniques (C1, C2 et C3) dont le premier (C1) au moins est agencé pour pouvoir se transformer en base radio, caractérisé par le fait que le premier combiné téléphonique (C1) au moins comporte un moyen pour marquer son canal de transmission lorsque celui-ci comprend un message audio, les autres combinés téléphoniques (C2 , C3) étant agencés pour rechercher le canal comportant une telle marque, reconnaître ladite marque et reproduire sur leur haut-parleur le contenu du message audio.

Pour effectuer ce marquage, selon un mode de réalisation en norme DECT, on utilise le champ BA comprenant les bits (a4a5a6). Ainsi la marque correspond à une valeur que l'on a attribuée à ce champ lorsque le champ audio a un contenu quelconque. Le champ a une autre valeur lorsque le champ audio est muet.

On a paramétré les autres combinés téléphoniques pour vérifier la valeur de ce champ. Lorsque ce champ a la valeur indiquée, les combinés téléphoniques sont agencés pour reproduire sur leur haut-parleur le contenu du champ audio du message reçu.

Le marquage peut être automatique et, par exemple, se produire avec la détection de la puissance audio captée sur le microphone du combiné téléphonique émettant.

Le marquage peut être volontaire, auquel cas on prévoit un moyen correspondant à une action sur le combiné téléphonique émettant, tel que l'appui sur une touche spécifique quand l'utilisateur est en train de parler.

La présente invention trouve son intérêt dans le cas d'un communication en mode direct établie entre deux combinés téléphoniques. Elle permet à un troisième combiné téléphonique de venir écouter la communication entre les deux combinés téléphoniques.

Le combiné téléphonique supplémentaire reçoit les émissions venant des deux canaux et diffuse le message audio de celui comportant le marquage.

La présente invention trouve une autre application dans le cas d'un échange faisant intervenir trois combinés téléphoniques. Un premier combiné téléphonique est en base et les autres sont synchronisés sur sa balise. La transmission se fait en mode half-duplex. Les deux autres combinés téléphoniques peuvent écouter les messages émis par le combiné téléphonique parlant.

Conformément à une caractéristique particulière,
d'une part, lorsque le premier combiné téléphonique se transforme en base il émet un signal de balise contenant un appel de groupe par lequel tous les combinés téléphoniques comprenant le même identifiant de groupe émettent une sonnerie,
d'autre part, tous les combinés téléphoniques sont paramétrés pour se synchroniser en position « décrochage » à la première sonnerie.

Ainsi, grâce à l'invention les combinés téléphoniques, après avoir décroché automatiquement, diffusent sur leur haut-parleur le signal audio provenant du premier combiné téléphonique.

Conformément à une autre caractéristique, le combiné téléphonique est agencé pour revenir à l'état logique actif non synchronisé lorsqu'il relâche sa touche de prise de ligne. Ainsi on permet aux autres combinés téléphoniques de se transformer en base et émettre un message s'ils le souhaitent.

L'invention sera mieux comprise à l'aide de la decription suivante de modes préférés de mise en oeuvre du procédé de l'invention, en regard des dessins annexés sur lesquels
la figure 1 représente schématiquement un réseau local de radiocommunication DECT;
la figure 2 représente un schéma fonctionnel d'un combiné téléphonique du réseau
la figure 3 représente des trames temporelles DECT d'échange de signaux de communication dans le réseau.

Le réseau téléphonique de la figure est ici un réseau à la norme DECT et comporte une base radio 1 reliée à une liaison 10 d'un réseau externe, le réseau téléphonique commuté par exemple. La base gère les communications d'une pluralité de terminaux radios tels que ceux référencés C1, C2 et C3, situés dans la zone de couverture radio de la base. Les terminaux sont des combinés téléphoniques.

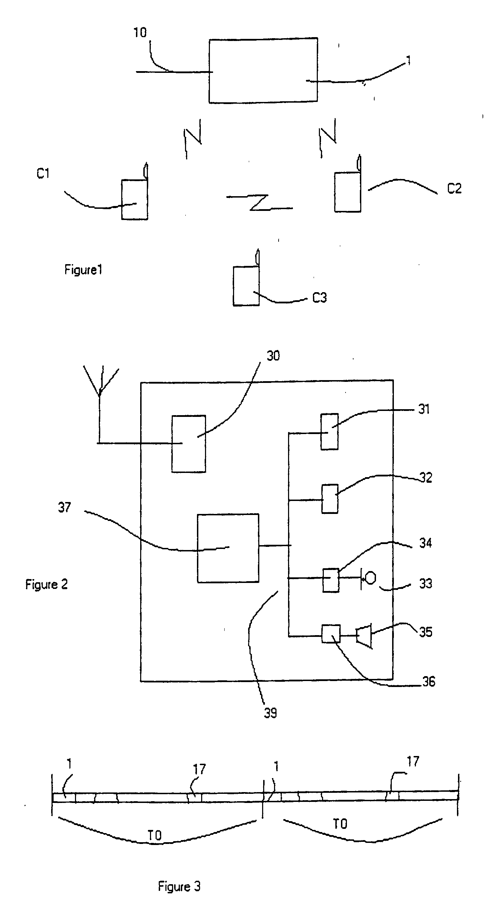

La figure 2 représente schématiquement les différents blocs fonctionnels d'un combiné téléphonique C1, mis en oeuvre dans le cadre de l'invention. Le combiné téléphonique comprend de façon classique, un bloc d'émission et de réception radio 30, une interface homme-machine 39 et un bloc central de commande 37. Le bloc radio 30 est destiné à émettre et recevoir des données à travers un canal de transmission radio, suivant le protocole DECT, afin de communiquer avec la base 1. L'interface homme-machine 39 comprend un clavier de saisie 31, un écran d'affichage 32, un microphone 33 et un haut-parleur 35. Le microphone 33 et le haut-parleur 35 sont respectivement reliés à un convertisseur analogique / numérique (CAN) 34 et à un convertisseur numérique /analogique (CNA) 36. Le clavier de saisie 31 comprend des touches téléphoniques standards dont la touche de prise de ligne, une touche pour commander l'affichage d'un menu principal et des touches pour se déplacer dans l'arborescence de menus. Le bloc central de commande 37 comprend un microprocesseur, auquel tous les éléments du combiné téléphonique C1 sont reliés, et est agencé pour commander le fonctionnement du combiné téléphonique C1.

De façon classique, la base radio 1 synchronise les terminaux, c'est à dire les asservit pour caler leur trame en opposition sur celle de la base, par émission cyclique sur une voie balise d'un message de synchronisation. Le message spécifie le rang, de 0 à 11, de la voie balise dans la trame et les terminaux peuvent ainsi déterminer l'instant futur du début de la trame suivante. Ils sont ainsi parfaitement calés en opposition de phase par rapport à la trame de la base 1.

Lorsque deux terminaux C1 et C2 ne sont pas à portée radio de la base 1, on sait établir une communication entre les deux terminaux dans ce cas. Il s'agit d'une communication dite en mode direct. Les combinés téléphoniques comportent la fonction mode direct. Dans ce cas au moins l'un des combinés téléphoniques, celui qui est appelant, comporte la fonction base radio.

Pour pouvoir établir une communication en mode direct, les utilisateurs doivent au préalable saisir un numéro de groupe de 000 à 999, le numéro de leur combiné téléphonique et les numéros de combiné téléphonique des correspondants, entre 00 et 99.

Ensuite, les utilisateurs doivent sélectionner sur leur combiné téléphonique l'utilisation en mode direct, soit dans un menu déroulant qui apparaît sur l'écran du combiné téléphonique, soit sur une touche spécifique si le combiné téléphonique en est pourvu.

Quand il n'y a pas de communication, tous les combinés téléphoniques sont alors à l'état « Actif non synchronisé ». Lorsque les combinés téléphoniques sont hors de portée de la base 1, aucun signal de balise n'est émis et les combinés téléphoniques balayent toutes les 10 secondes les canaux à la recherche d'un signal avec l'identité appropriée. Lorsqu'un utilisateur, dont le combiné téléphonique comporte la fonction base radio, veut établir une communication hors de portée de la base 1, il spécifie le numéro de combiné téléphonique de l'appelé puis appuie sur le bouton de prise de ligne. Le combiné téléphonique appelant se transforme en base. Un canal est sélectionné, et le combiné téléphonique commence à émettre un signal de balise avec le message approprié qui comporte notamment l'identification de combiné téléphonique du correspondant. Tous les combinés téléphoniques reçoivent le signal de balise mais seul le combiné téléphonique appelé est autorisé à se placer en l'état au repos synchronisé. Il est alors en attente de communication et maintient la synchronisation trame et multi-trame avec la base.

Le combiné téléphonique appelé sonne et l'utilisateur décroche. Conformément à la norme DECT, les messages échangés entre les deux combinés téléphoniques sont du type PT (paging tail) au format court et comprennent l'identifiant temporaire assigné (TPUI) du combiné téléphonique appelé. Cette valeur est calculée à partir du numéro de groupe et du numéro de combiné téléphonique.

Conformément à l'invention, un troisième combiné téléphonique peut lire les messages émis par l'appelant. On se reporte à la figure 3 qui reproduit deux trames T0 de voies radio du réseau DECT. Chaque trame, de durée de 10 ms, comporte 24 intervalles de temps ou voies temporelles, désignés également « slots ». Les douze premiers, référencés E1, sont réservés de la transmission de la base vers les terminaux et les 12 autres R1 sont réservés aux transmissions des terminaux actifs vers la base 1. La référence E1 correspond donc à la demi-période de trame pendant laquelle le terminal appelé est récepteur sur cette voie. Il peut être émetteur pendant la demi-période R1. De façon classique, la base synchronise les terminaux en portée radio, c'est à dire les asservit pour caler leur trame en opposition sur celle de la base par émission cyclique sur une voie balise d'un message de synchronisation. Le message spécifie le rang de 0 à 11, de la voie balise dans la trame T0 et les terminaux peuvent ainsi déterminer l'instant futur du début de la trame T0 suivante. Ils sont parfaitement calés en opposition de phase par rapport à la trame T0 de la base, c'est à dire décalés d'une demi-trame sur celle-ci afin de pouvoir toujours communiquer dans un sens ou dans l'autre.

Dans l'objectif de permettre à un troisième combiné téléphonique, synchronisé sur la balise de l'appelant, d'écouter la communication entre les deux premiers, il se comporte comme un combiné téléphonique appelé.

Conformément à l'invention, dans les canaux qui ont réellement un message audio, on met une marque qui les distingue des canaux qui n'ont pas de message audio.

Ainsi, dans l'exemple de la figure 3, la communication est établie entre l'appelant qui émet sur le canal de rang 1 et l'appelé qui émet sur le canal de rang 17 de la trame T0. Par le marquage du canal 1 le combiné téléphonique tiers, dans la mesure ou il a été agencé pour rechercher les canaux comportant cette marque, va reconnaître cette marque, et transformer le message contenu dans ce canal pour le reproduire sur son haut-parleur. Il laisse passer le signal du canal 17 qui ne comporte pas de marque. Il est à noter que les deux combinés téléphoniques ne parlant pas en même temps, en général, seul un canal est marqué dans la trame. Lorsque l'appelant a cessé de parler, la marque disparaît. A ce moment, le combiné téléphonique tiers est programmé pour se mettre en recherche de canal comportant une marque après un nombre déterminé de périodes sans marque. Ce nombre est au moins supérieur à un. Lorsque l'appelé répond, et dans la mesure où le combiné téléphonique de l'appelé est également convenablement programmé, il va marquer son canal d'émission. Le combiné téléphonique tiers peut alors écouter le message de l'appelé et le reproduire sur son haut-parleur.

Un conflit peut survenir lorsque deux canaux de la trame sont marqués, le combiné téléphonique n'étant pas capable de reproduire les deux messages. On résout ce conflit en affectant une priorité. Par exemple, on peut programmer le combiné téléphonique pour qu'il donne la priorité aux marques de l'appelant. Selon un autre mode de réalisation, on affecte la priorité au canal de même rang que celui qui était déjà marqué avant l'apparition des deux marques dans la même trame.

Comme cela a été indiqué plus haut, le marquage, en norme DECT, est choisi de préférence par affectation d'une valeur déterminée dans le champ BA qui est un des champs de service de l'en tête du canal. Ce champ comprend 8 bits. On réserve les bits a4a5a6 pour cette fonction. Ceux-ci se voient attribuer une première valeur lorsque le signal audio comporte un message non vide et une autre valeur lorsque le signal audio comporte un message vide. Le combiné téléphonique appelé est programmé pour émettre le contenu du signal audio lorsque la valeur est appropriée.

L'invention trouve également une application dans le cas où l'on souhaiterait étendre le mode direct à plus de deux combinés téléphoniques. En effet dans l'application précédente, le troisième combiné téléphonique peut seulement écouter les messages échangés entre deux combinés téléphoniques à l'intérieur d'une communication directe établie. Le troisième combiné téléphonique n'est pas autorisé conformément à la norme à perturber le lien.

On résout ce problème conformément à une autre caractéristique de l'invention de la façon suivante.

Les combinés téléphoniques sont configurés pour accepter le mode direct

Le combiné téléphonique, au moins celui-ci, destiné à transmettre les messages, est configuré pour envoyer en mode direct un message de sonnerie de groupe.

Les combinés téléphoniques sont paramétrés enfin pour décrocher automatiquement à la première sonnerie.

Cette configuration étant pré-requise, la procédure se déroule de la façon suivante :

On vérifie si les combinés téléphoniques sont appariés à la même base. S'ils ne le sont pas, on les configure au préalable pour utiliser le même numéro de groupe

Ensuite, chaque utilisateur sélectionne sur son menu déroulant la fonction mode direct.

Les combinés téléphoniques se mettent dans l'état logique «actif non-synchronisé » c'est-à-dire qu'ils se mettent en recherche de base.

Lorsque le premier combiné téléphonique veut transmettre un message aux autres combinés téléphoniques, il appuie sur sa touche de prise de ligne et la maintient enfoncée.

Le combiné téléphonique appelant se transforme en base radio et émet un signal de balise avec un signal de sonnerie de groupe.

Les autres combinés téléphoniques qui captent le signal de balise se synchronisent sur celle-ci et émettent une sonnerie

Ils décrochent tous.

Ils diffusent sur leur haut-parleur le signal audio, comportant le marquage conforme à l'invention, provenant du premier combiné téléphonique.

Dans la mesure où le premier utilisateur maintient la touche de prise de ligne appuyée, il ne permet pas à un autre combiné téléphonique de dérouler la procédure complète d'établissement de communication duplex. On reste en mode half-duplex.

Lorsque le premier utilisateur relâche la touche de prise de ligne, tous les combinés téléphoniques se mettent en recherche de base.

Un autre combiné téléphonique, configuré pour se transformer en base, peut alors se transformer en base, parler à son tour et être écouté par les autres combinés téléphoniques.

Grâce à l'invention on offre à l'utilisateur une interface du type talkie-walkie standard mais en se fondant ici sur les services de la norme DECT.

## Revendications

1. Procédé d'intercommunication dans un réseau local de radio communication à accès duplex multiple par division temporelle, comprenant au moins une base radio (1) reliée à un réseau externe tel que le réseau téléphonique commuté et, associés à celle-ci, au moins trois combinés téléphoniques (C1, C2 et C3) dont le premier (C1) au moins est agencé pour pouvoir se transformer en base radio, **caractérisé par le fait que** le premier combiné téléphonique (C1) au moins comporte un moyen pour apposer une marque sur son canal de transmission lorsque la transmission comprend un message audio, les autres combinés téléphoniques (C2 , C3) étant agencés pour rechercher le canal comportant une telle marque, reconnaître ladite marque et émettre sur leur haut-parleur le contenu du signal audio.

2. Procédé selon la revendication précédente, **caractérisé par le fait que** l'étape de marquage de canal est automatique dès que ledit premier combiné téléphonique (C1) émet un message audio

3. Procédé selon la revendication 1, **caractérisé par le fait que** l'étape de marquage de canal est soumise à une action volontaire de la part de l'utilisateur dudit premier combiné téléphonique (C1).

4. Procédé selon la revendication 1,2 ou 3, **caractérisé par le fait que** lesdits autres combinés téléphoniques se mettent en recherche de canal comportant la marque après une période minimale de plus d'une trame sans marque.

5. Procédé selon l'une des revendications précédentes, **caractérisé par le fait que** l'ensemble des combinés téléphoniques est agencé pour pouvoir à la fois marquer leur canal d'émission lorsqu'ils émettent un signal audio et rechercher un canal comportant une telle marque lorsqu'ils sont en écoute.

6. Procédé selon l'une des revendications 1 à 5, deux combinés téléphoniques (C1 et C2) étant en communication directe, **caractérisé par le fait que** les autres combinés téléphoniques en écoute sont en mode au repos synchronisé

7. Procédé selon la revendication précédente, **caractérisé par le fait que** lorsque deux canaux marqués apparaissent dans une trame, les combinés téléphoniques en écoute sont agencés pour n'émettre sur leur haut-parleur que le signal audio du canal du combiné téléphonique appelant.

8. Procédé selon la revendication 6, **caractérisé par le fait que** lorsque deux canaux marqués apparaissent dans une trame, les combinés téléphoniques en écoute sont agencés pour émettre sur leur haut-parleur le signal audio du canal de même rang que celui de la trame précédente qui était déjà marqué.

9. Procédé selon l'une des revendications 1 à 5, **caractérisé par le fait que** la transmission entre ledit premier combiné téléphonique (C1) et lesdits autres combinés téléphoniques est en mode half-duplex.

10. Procédé selon la revendication précédente, **caractérisé par le fait que** ledit premier combiné téléphonique (C1) est agencé pour émettre en mode direct un signal de balise avec un message de type à sonnerie de groupe et **par le fait que** les combinés téléphoniques sont paramétrés pour décrocher automatiquement après la première sonnerie.

11. Procédé selon l'une des revendications 9 et 10, **caractérisé par le fait que**, les combinés téléphoniques n'étant pas appariés à une même base, il comprend une étape de pré-saisie d'un numéro de groupe commun par les combinés téléphoniques devant communiquer en mode direct.

12. Procédé selon l'une des revendications 9 à 11, **caractérisé par le fait que** lorsque ledit premier combiné téléphonique (C1) relâche la touche de prise de ligne, tous les combinés téléphoniques se mettent dans l'état logique actif non synchronisé de recherche de base.

13. Procédé selon la revendication précédente, **caractérisé par le fait que** tous les combinés téléphoniques peuvent se transformer en base radios.

14. Combiné téléphonique pour la mise en oeuvre du procédé selon l'une des revendications précédentes, **caractérisé par le fait qu'**il comporte un moyen pour apposer une marque sur son canal de transmission lorsqu'il émet un message audio.

15. Combiné téléphonique selon la revendication précédente **caractérisé par le fait qu'**il comporte un moyen pour rechercher un canal comportant une marque, reconnaître ladite marque et diffuser sur son haut-parleur le contenu du message audio sur ledit canal.

## Claims

1. Intercommunication process in a local radio communication network with time division multiple access/duplex, comprising at least one radio base (1) linked to an external network such as the switched telephone network and, associated with the latter, at least three telephone handsets (C1, C2, and C3), of which at least the first (C1) is arranged to be able to be transformed into a radio base, **characterised in that** at least the first telephone handset (C1) includes a means for placing a mark on its transmission channel when the transmission includes an audio message, the other telephone handsets (C2, C3) being arranged to search for the channel which includes such a mark, to recognise the said mark and to transmit on their loudspeaker the contents of the audio signal.

2. Process according to the preceding claim, **characterised in that** the channel marking step is automatic from the time that the said first telephone handset (C1) transmits an audio message.

3. Process according to claim 1, **characterised in that** the channel marking step is subjected to a deliberate action by the user of said first telephone handset (C1).

4. Process according to claim 1, 2 or 3, **characterised in that** the said other telephone handsets start to search for the channel which includes the mark after a minimum period of more than one frame without any mark.

5. Process according to one of the preceding claims, **characterised in that** the group of telephone handsets is arranged to be able simultaneously to mark their transmission channel when transmitting an audio signal and to search for a channel which includes such a mark when they are in listening mode.

6. Process according to one of claims 1 to 5, two telephone handsets (C1 and C2) being in direct communication, **characterised in that** the other telephone handsets in listening mode are in the synchronised idle state.

7. Process according to the preceding claim, **characterised in that** when two marked channels appear in a frame, the telephone handsets in listening mode are arranged to transmit on their loudspeaker only the audio signal of the channel of the calling telephone handset.

8. Process according to claim 6, **characterised in that** when two marked channels appear in a frame, the telephone handsets in listening mode are arranged to transmit on their loudspeaker the audio signal of the channel of the same row as that of the preceding frame which was already marked.

9. Process according to one of claims 1 to 5, **characterised in that** the transmission between the said first telephone handset (C1) and the said other telephone handsets is in half-duplex mode.

10. Process according to the preceding claim, **characterised in that** the said first telephone handset (C1) is arranged to transmit in direct mode a marker signal with a message of the group ringing type and **in that** the telephone handsets are programmed to unhook automatically after the first ring.

11. Process according to one of claims 9 and 10, **characterised in that**, the . telephone handsets not being matched to the same base, it includes a stage of pre-input of a common group number by the telephone handsets which are to communicate in direct mode.

12. Process according to one of claims 9 to 11, **characterised in that** when the said first telephone handset (C1) releases the line seizure button, all the telephone handsets go into the non-synchronised active logic state of searching for the base.

13. Process according to the preceding claim, **characterised in that** all the telephone handsets can be transformed into radio bases.

14. Telephone handset for implementing the process according to one of the preceding claims, **characterised in that** it includes means of placing a mark on its transmission channel when it transmits an audio message.

15. Telephone handset according to the preceding claim, **characterised in that** it includes a means for searching for a channel which includes a mark, recognising the said mark and distributing on its loudspeaker the contents of the audio message on the said channel.

## Patentansprüche

1. Verfahren zur Interkommunikation in einem lokalen Funknetz mit Vielfachduplexzugriff durch Zeitteilung, enthaltend wenigstens eine Funkbasis (1), die mit einem externen Netz, wie dem Leitungsvermittlungstelefonnetz, verbunden ist, und wobei dieser wenigstens drei Telefonhandapparate (C1, C2 und C3) zugeordnet sind, von denen wenigstens der erste (C1) derart eingerichtet ist, daß er sich in einen Funkbasis verwandeln kann, **dadurch gekennzeichnet, daß** wenigstens der erste Telefonhandapparat (C1) ein Mittel aufweist, um auf seinem Übertragungskanal eine Markierung vorzusehen, wenn die Übertragung eine Audionachricht enthält, wobei die anderen Telefonhandapparate (C2, C3) eingerichtet sind, um den eine Markierung aufweisenden Kanal zu suchen, die Markierung zu erkennen und auf ihrem Lautsprecher den Inhalt des Audiosignals zu senden.

2. Verfahren nach dem vorhergehenden Anspruch, **dadurch gekennzeichnet, daß** der Kanalmarkierungsschritt automatisch ist, sobald der erste Telefonhandapparat (C1) eine Audionachricht sendet.

3. Verfahren nach Anspruch 1, **dadurch gekennzeichnet, daß** der Kanalmarkierungsschritt einer beabsichtigten Aktion seitens des Benutzers des ersten Telefonhandapparates (C1) unterworfen wird.

4. Verfahren nach Anspruch 1, 2 oder 3, **dadurch gekennzeichnet, daß** die anderen Telefonhandapparate nach einem minimalen Zeitraum nach einem Pulsrahmen ohne Markierung mit der Suche des die Markierung aufweisenden Kanals anfangen.

5. Verfahren nach einem der vorhergehenden Ansprüche, **dadurch gekennzeichnet, daß** die Menge der Telefonhandapparate derart eingerichtet ist, daß sie beim Senden eines Audiosignals ihren Sendekanal gleichzeitig markieren können, und daß sie beim Hören einen eine derartige Markierung aufweisenden Kanal suchen können.

6. Verfahren nach einem der Ansprüche 1 bis 5, wobei zwei Telefonhandapparate (C1 und C2) in direkter Kommunikation miteinander stehen, **dadurch gekennzeichnet, daß** die anderen hörenden Telefonhandapparate im synchronisierten Ruhemodus sind.

7. Verfahren nach dem vorhergehenden Anspruch, **dadurch gekennzeichnet, daß** wenn zwei markierte Kanäle in einem Pulsrahmen erscheinen, die hörenden Telefonhandapparate derart eingerichtet sind, daß sie auf ihrem Lautsprecher nur das Audiosignal des Kanals des anrufenden Telefonhandapparates senden.

8. Verfahren nach Anspruch 6, **dadurch gekennzeichnet, daß** wenn zwei markierte Kanäle in einem Pulsrahmen erscheinen, die hörenden Telefonhandapparate derart eingerichtet sind, daß sie auf ihrem Lautsprecher das Audiosignal des Kanals senden, der den gleichen Rang hat, wie derjenige von dem vorhergehenden Pulsrahmen, der bereits markiert war.

9. Verfahren nach einem der Ansprüche 1 bis 5, **dadurch gekennzeichnet, daß** die Übertragung zwischen dem ersten Telefonhandapparat (C1) und den anderen Telefonhandapparaten im Halbduplex-Modus erfolgt.

10. Verfahren nach dem vorhergehenden Anspruch, **dadurch gekennzeichnet, daß** der erste Telefonhandapparat (C1) eingerichtet ist, um im direkten Modus ein Bakensignal mit einer Nachricht vom Typ Gruppenklingeln zu senden, und daß die Telefonhandapparate derart parametrisiert sind, daß sie nach dem ersten Klingeln automatisch abnehmen.

11. Verfahren nach einem der Ansprüche 9 und 10, **dadurch gekennzeichnet, daß** wenn die Telefonhandapparate nicht zu der gleichen Basis gehören, es einen Schritt zum Vorab-Eingeben einer gemeinsamen Gruppennummer über die Telefonhandapparate aufweist, bevor im direkten Modus kommuniziert wird.

12. Verfahren nach einem der Ansprüche 9 bis 11, **dadurch gekennzeichnet, daß** wenn der erste Telefonhandapparate (C1) die Leitungsaufbautaste freigibt, alle Telefonhandapparate in den aktiven, nicht synchronisierten logischen Zustand der Basissuche übergehen.

13. Verfahren nach dem vorhergehenden Anspruch, **dadurch gekennzeichnet, daß** sich alle Telefonhandapparate in eine Funkbasis verwandeln können.

14. Telefonhandapparat zur Durchführung des Verfahrens nach einem der vorhergehenden Ansprüche, **dadurch gekennzeichnet, daß** er ein Mittel aufweist, um seinen Übertragungskanal mit einer Markierung zu versehen, wenn er eine Audionachricht sendet.

15. Telefonhandapparat nach dem vorhergehenden Anspruch, **dadurch gekennzeichnet, daß** er ein Mittel aufweist, um einen eine Markierung aufweisenden Kanal zu suchen, die Markierung zu erkennen und über seinen Lautsprecher den Audionachrichteninhalt auf dem Kanal zu senden.
